# NOUVEAU FASCICULE DE BREVET EUROPEEN

(11) **EP 0 373 034 B2**
(45) Date de publication et mention de la décision concernant l'opposition: **03.02.1999**
(45) Mention de la délivrance du brevet: 10.08.1994
(21) Numéro de dépôt: 89403297.8
(22) Date de dépôt: 28.11.1989
(51) Int. Cl.: A01M 7/00, B05B 9/06

(54) **Procédé et dispositif pour l'épandage programmé d'un produit actif à la surface du sol**
Verfahren und Vorrichtung zum programmierten Aufbringen eines Wirkstoffes auf die Bodenoberfläche
Method and device for the programmed distribution of an active product to the ground surface

(30) Priorité: 28.11.1988 FR 8815525
(43) Date de publication de la demande: 13.06.1990
(73) Titulaire: Barlet, Christian, F-78580 Maule (FR)
(72) Inventeur: Barlet, Christian, F-78580 Maule (FR)
(74) Mandataire: Wagret, Frédéric

(56) Documents cités:
- EP-A- 181 308
- EP-A- 282 639
- EP-A- 0 086 075
- WO-A-86/05353
- DD-A- 100 407
- DE-A- 3 540 923
- DE-A- 3 617 302
- GB-A- 2 039 202
- US-A- 4 197 995
- US-A- 4 530 463
- A.C.E.C. REVUE no. 4, 1987, üages 14-17, Charleroi, B; "Le spraymatic: application de l'electronique a microprocesseur au machines agricoles" * pages 16,17:"Changement de consigne"*

## Description

La présente invention concerne un procédé, et un dispositif en vue de la mise en oeuvre du procédé, permettant l'épandage au sol d'un produit actif (à l'état liquide ou éventuellement pulvérulent). Les préambules der revendications 1 de procédé et 12 de dispositif sont connus par le document GB-A-2 039 202.

Plus spécialement l'invention vise à permettre de desservir de façon sélective certaines zones de la surface du sol parcouru, en fonction d'un programme déterminé.

L'invention doit donc permettre, en utilisant un dispositif d'épandage de type connu, et tel qu'il est notamment couramment en usage dans l'agriculture, de répandre un produit, essentiellement sous forme liquide ou de bouillie, sur le sol mais en permettant de programmer soit instantanément et en temps réel, soit à l'avance, celles des zones parcourues par l'appareil qui devront recevoir sélectivement le produit, tandis que les autres ne seront pas traitées.

L'invention recevra une première application dans le domaine agricole en permettant d'assurer l'épandage d'un produit à action sur les végétaux, en épousant de façon très précise la configuration du terrain ; l'invention permettra notamment d'assurer une répartition homogène égale et régulière du produit de traitement sur l'ensemble de la surface de la parcelle traitée en évitant d'une part un double déversement (source de gaspillage et nuisible aux cultures) et en évitant d'autre part la création de zones manquantes.

Un second objet de l'invention, vise à permettre le déversement de produits actifs au sein d'une parcelle dans des zones déterminées et sélectionnées correspondant à des besoins ponctuels, de façon à assurer et à limiter le traitement là où il est sélectivement nécessaire et en épargnant les zones où le déversement du produit serait inutile voire nuisible.

Enfin un troisième objet de l'invention vise à permettre de réaliser sur la surface du sol des motifs ou représentations à des fins d'ornementation, esthétique, publicitaires, décorative ou de signalisation notamment aérienne, ceci sur une grande échelle.

Et cet objet pourra être obtenu en répandant sur un sol cultivé dans des zones sélectivement programmées un produit de fertilisation et à action sur les végétaux, par exemple procurant un effet d'accroissement des cultures tandis que éventuellement dans les zones complémentaires serait déversé un produit inhibant la croissance, de sorte que seront ainsi mis en relief les zones fertilisées faisant apparaître de loin des motifs, lettres, images ou toute représentation.

Et ce même objet peut également être obtenu indépendamment de toute surface mise en culture par exemple sur le sol d'un terre-plein, en assurant l'épandage sur la surface du sol (non cultivé) de produits actifs par exemple colorés dont la dispersion programmée selon des zones individuelles discrètes, réalisera un ensemble monochrome ou éventuellement polychrome figurant une représentation ou un message.

Les deux applications ci-dessus évoquées respectivement par épandage d'un produit à action sur la végétation d'une part, et par épandage d'un produit à action de coloration d'autre part, bien qu'ils relèvent de préoccupations et de deux secteurs d'activité totalement différents, mettent cependant en oeuvre les mêmes méthodes et les mêmes procédés ainsi que les mêmes moyens qui font l'objet de l'invention.

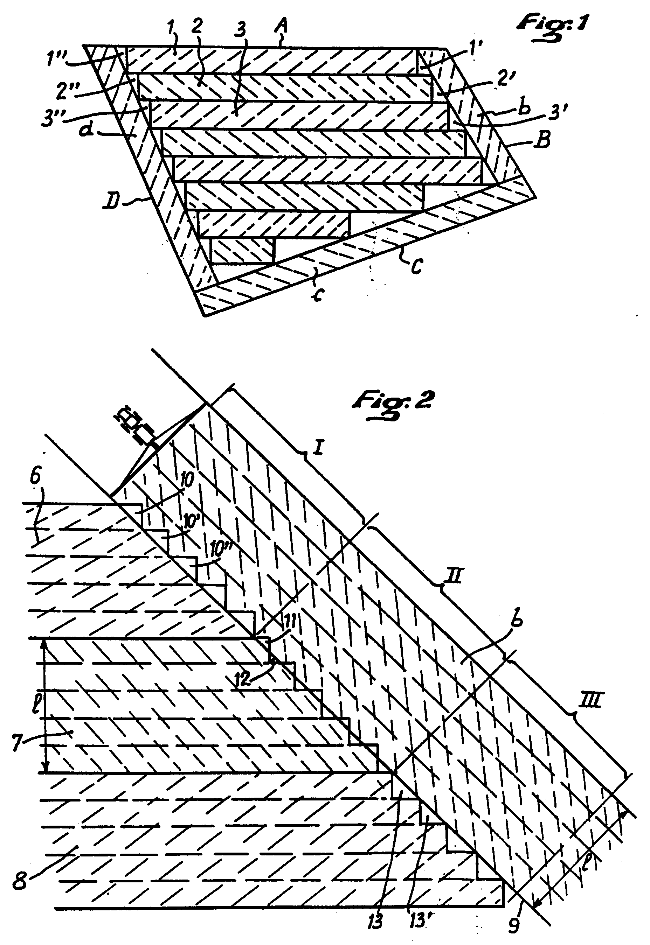

L'agriculteur devant répandre un produit sur une parcelle à partir d'une rampe mobile, décompose la parcelle en bandes (suivant la plus grande longueur de la parcelle) parallèles entre elles et de préférence parallèles à l'un des côtés. Ces bandes sont de largeur égale à celle de la rampe de l'appareil. Une telle hypothèse est envisagée et représentée à la figure 1.

On voit ainsi que la parcelle peut être parcourue et desservie selon des bandes parallèles entre elles et parallèles à l'un des côtés A. Le long des autres côtés B,C,D seront prévues des bandes marginales ou fourrières b,c,d.

On voit sur la figure 1 qui représente et illustre cette hypothèse que les bords intérieurs des fourrières ou des bandes marginales traitées en dernier suivent une ligne en escalier.

Dans le cas, représenté à la figure 1, où toutes les buses sont soumises à une commande unique, les bandes parallèles 1,2,3 débutent et se terminent, d'un seul coup, c'est-à-dire selon une ligne transversale perpendiculaire à l'axe de la bande correspondante ; de sorte que la "marche" de l'escalier a une largeur qui correspond à la largeur de chaque bande parallèle.

Dans l'exemple de la figure 1 après traitement des fourrières b,c et d, on voit que subsistera par conséquent un espace intercalaire en marches d'escalier correspondant aux triangles successifs 1,1'',2',2'',3',3'', etc...

La figure 2 montre et illustre la ligne frontière entre le bord terminal des bandes parallèles 6 et 7 et la fourrière b dans le cas où les tronçons de rampe peuvent être commandées séparément, suivant que l'opérateur commande la fermeture de chaque rampe plus ou moins tôt.

On voit qu'il est donc difficile dans le cadre des procédés et du matériel actuellement existant de réaliser un recouvrement de la surface du sol, au niveau du bord terminal des bandes parallèles, de façon à épouser exactement la ligne idéale correspondant à la droite 9 définissant le bord intérieur de la fourrière.

Et dans tous les cas on aboutit au mieux à l'intérieur de chaque bande à une terminaison en escalier qui laisse subsister soit un double épandage (les marches empiètent sur la fourrière), soit un manque (les marches restent en-deçà de la fourrière), soit un compromis intermédiaire dans lequel les marches sont à cheval sur le bord de la fourrière et laissent par conséquent subsister sur la moitié de la surface des marches un manque et sur l'autre moitié un doublage...

L'invention permet de remédier a cet inconvénient et autorise, par la mise en oeuvre du procédé et du dispositif de l'invention, le recouvrement en fin de bande parallèle, de la surface du sol, selon toute configuration appropriée et prédéterminée, sans intervention de l'opérateur,

Il est possible en utilisant le procédé et l'appareil tel que décrit dans la présente invention, de réaliser sur le sol des configurations et représentations suivant un contour et une géométrie programmés et ceci sans intervention manuelle.

A cet effet, l'invention concerne un procédé d'épandage selon la Revendication 1 et un dispositif selon la Revendication 8, en vue de la mise en oeuvre de ce procédé.

On a décrit ci après une forme de réalisation et un mode de fonctionnement du dispositif, correspondant à deux domaines d'application de l'invention respectivement pour le déversement de produits dans le cadre d'une action culturale.

La seconde application intéressant le tracé au sol de messages ou représentations de grandes dimensions à des fins ornementales, publicitaires, décoratives ou analogues.
Les figures 1 et 2, précédemment analysées illustrent les méthodes d'épandage au sol selon l'art antérieur.
LA FIGURE 3 illustre un mode de fonctionnement possible du dispositif selon la Revendication 8.
La figure 4 représente un message ou image destiné à être reproduit sur le sol en grande dimension.
La figure 5 représente la mise en place de cette image par un dispositif d'épandage utilisant les techniques de l'invention.
La figure 6 représente un schéma du dispositif et de la machine mettant en oeuvre la répartition programmée selon l'invention.
Les figures 7 et 8 montrent des dispositifs de reconnaissance optique du terrain associés au dispositif de l'invention.

Un mode de fonctionnement possible du dispositif, dans le cadre de l'épandage d'un produit actif à des fins agricoles est illustré sur la FIGURE 3

Et on voit immédiatement, par opposition aux techniques antérieures qui ont été exposées précédemment, que l'épandage selon les procédés et le matériel objet de la présente invention permet d'assurer une répartition régulière et sans doublure ni manque, éliminant les risques d'erreur liés au facteur humain.

En effet, on voit selon la figure 3 que les bandes parallèles respectivement 6',7' et 8' peuvent, dans le procédé de l'invention, commencer et se terminer par une coupe transversale en biseau d'angle α correspondant précisément à l'angle formé entre les axes des bandes parallèles et la fourrière b terminale.

On voit ainsi que la machine d'épandage terminant la bande parallèle 6' et avançant selon la flèche F1 aborde la ligne 9' qui correspond au bord terminal intérieur idéal de la fourrière b.

Et lorsque l'extrémité 20 de l'ensemble de la rampe d'épandage 21 aborde la ligne 9', l'opérateur dans le cadre de la présente invention, envoie un signal au micro-processeur de programmation.

Ce micro-processeur a reçu préalablement l'affichage des données correspondant à la configuration du terrain, notamment l'angle a qui est intégré dans les données du programme ; et en fonction de cet angle α, et de la vitesse de l'avancement du véhicule (qui est aisément communiquée au micro-processeur depuis une sonde située au niveau d'une roue, comme connue en soi), ce dernier est alors apte à engendrer progressivement des signaux de fermeture qui vont atteindre chacune des buses composant l'ensemble de la rampe 21 exactement au moment où la buse aborde la ligne 9' ; de sorte que la bande de recouvrement 6' se terminera selon un biseau d'angle α.

La machine d'épandage fait alors demi-tour selon le parcours F2 pour aborder dans le sens inverse du précédent et selon la flèche F3 la bande 7' parallèle à la bande précédente 6'.

Et alors l'opérateur peut donner un signal de départ lorsque l'extrémité 20 de l'ensemble des rampes vient au niveau de la ligne 9' ; ce signal va alors déclencher l'ouverture progressive des buses individuellement et l'une après l'autre au fur et à mesure que chaque buse arrive à l'aplomb de la ligne idéale 9' ; on aura bien ainsi un bord d'attaque de la bande 7' suivant le même biseau d'angle que pour le bord terminal de la bande 6'.

Et ainsi l'ensemble des bords terminaux des bandes parallèles forme une ligne continue qui épouse et jouxte le bord intérieur de la ligne 9' de la fourrière.

De sorte que l'épandage peut se faire selon cette technique sans doublage ni manque.

On comprend qu'il est ainsi facile à l'opérateur d'afficher au départ les angles correspondant aux extrémités, situés de chaque côté des bandes parallèles pour obtenir ainsi une couverture au centre de la parcelle dont les bords suivent exactement le contour de la fourrière correspondant au passage terminal.

Selon un développement de l'invention et dans le cas de parcelles plus complexes, il est possible, après avoir analysé sur plan le profil de la parcelle et la décomposition des bandes parallèles, d'afficher un programme, mémorisé sur tout support convenable notamment magnétique ou optique, et intégré dans le micro-processeur lequel, en fonction de chaque parcours, connaît, à partir du signal déclenché par l'opérateur, le cycle de fermeture, ou d'ouverture des buses individuelles destinées à conformer sur le terrain l'extrémité de la bande de façon à lui faire épouser le contour et la forme du bord intérieur de la fourrière correspondant au passage terminal de la machine.

On comprendra que l'invention est indépendante de la nature du produit choisi qui peut être un fertilisant, un herbicide sélectif ou tout produit destiné à être appliqué sur le sol ou sur les cultures à des fins agricoles.

L'invention est également indépendante de la composition et de la nature du produit qui pourrait être de nature pulvérulente ou encore sous forme d'un liquide clair ou d'une bouillie ; le produit peut également être préparé et maintenu en cours de brassage dans un réservoir tout comme il pourrait être soumis à préparation instantanée à partir d'un réservoir de solvant (notamment d'eau) auquel serait incorporé, dès la phase antérieure de projection, l'élément actif sous forme liquide ou pulvérulente.

L'invention concerne notamment dans le domaine agricole un développement particulier permettant un traitement sélectif des surfaces en fonction des besoins de chaque zone discrète préalablement analysée.

Et à cet effet dans le cadre de la présente invention l'ensemble de la rampe comportant les buses de projection est doublé par des moyens d'analyse optique située de préférence en amont dans le sens d'avancement de la machine, et ces moyens d'analyse optique comportent des moyens de prélèvement d'image en nombre égal à celui des rampes, et chaque moyen de prélèvement d'image, par exemple un condenseur optique, est relié par des moyens de transmission, par exemple un guide d'ondes optiques, à une centrale d'analyses d'images apte à détecter les caractéristiques optiques de la zone discrète située à l'aplomb du condenseur optique, et ces moyens d'analyse optique sont aptes à transmettre au micro-processeur de programmation un signal de mise en action, ou de fermeture de la buse de déversement en fonction de l'analyse détectée précédemment.

Ainsi le dispositif selon l'invention permet de détecter la présence de parasites notamment de mauvaises herbes implantées dans une culture déterminée.

Ce développement de l'invention sera particulièrement adapté à la projection d'herbicides sélectifs lesquels agissent sélectivement notamment pour la destruction des repousses d'une culture antérieure au sein d'une culture nouvelle ; on citera à titre d'exemples les repousses de colza dans une culture de blé ou de folle avoine dans une culture de tournesol.

On sait que l'infestation de plantes indésirables, notamment des repousses de la culture antérieure, est loin d'être homogène de sorte que la répartition de l'infestation indésirable peut être tout à fait localisée.

Le traitement effectué à partir d'une machine d'épandage et à vue, l'opérateur commandant le déversement du produit herbicide, conduit à des imprécisions, à des erreurs de jugement et à une grande déperdition en raison des quantités déversées dans des zones inutiles ou inversement.

L'invention permet précisément de commander de façon automatique et sélective le déversement de façon très localisée, dans des zones discrètes correspondant de façon précise aux besoins.

La détection des zones de besoins pourra être effectuée par des palpeurs mécaniques, notamment dans le cas de différences de tailles entre les cultures souhaitées et les repousses indésirables.

Cependant il est également possible en utilisant des moyens optiques de détecter localement, et en amont de l'arrivée de la buse, la présence de cultures indésirables.

Et dans ce cas la présence de l'herbe ou de la plante parasite ayant été détectée automatiquement par des moyens optiques, peut déclencher au niveau du micro-processeur de programmation un ordre de déversement au niveau de la buse qui suit le dispositif optique concerné et qui peut par conséquent projeter le produit actif, jusqu'à ce que l'organe optique détecte la normalité de l'image provoquant par conséquent l'arrêt du déversement.

On pourra citer ainsi à titre d'exemple la destruction du chiendent dans une culture de blé à proximité de sa maturité vers les mois de Juin-Juillet ; le blé étant d'une couleur jaune alors que le chiendent en cours de croissance est de couleur verte ce qui présente une différence chromatique suffisante pour permettre un repérage à la verticale.

On pourrait imaginer une analyse décentralisée au niveau de chaque buse, c'est-à-dire la mise en place d'une caméra vidéo d'une cellule photoélectrique au niveau de chaque rampe ; ce qui représente cependant une solution lourde et onéreuse.

On préfèrera par conséquent un dispositif d'analyse d'images centralisé recevant par des guides d'ondes formés de fibres optiques, les images provenant de chacun des condenseurs optiques situés au niveau de chaque buse.

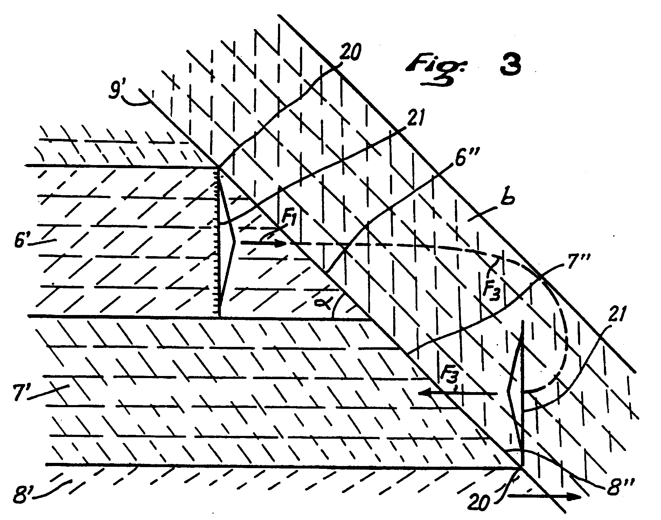

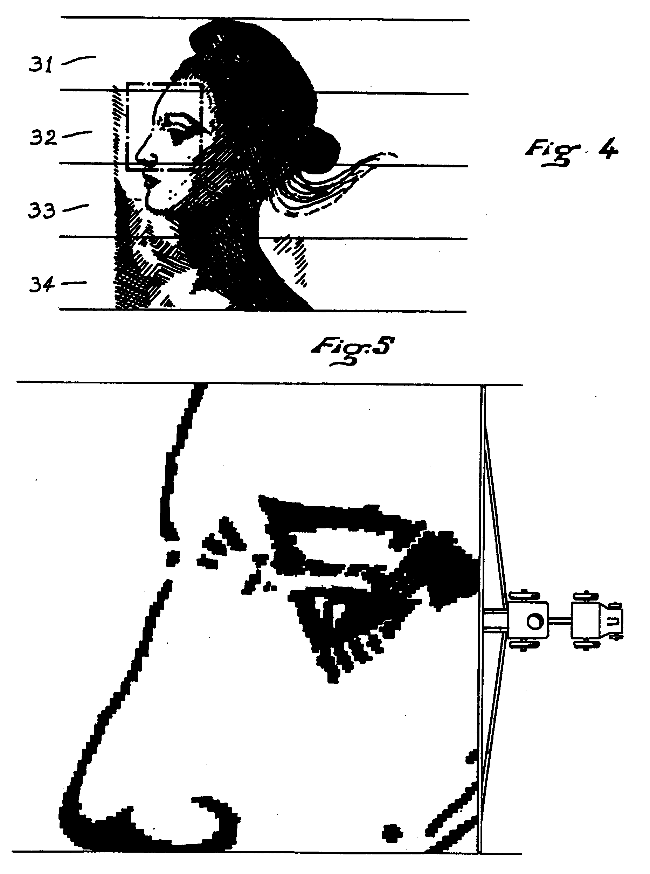

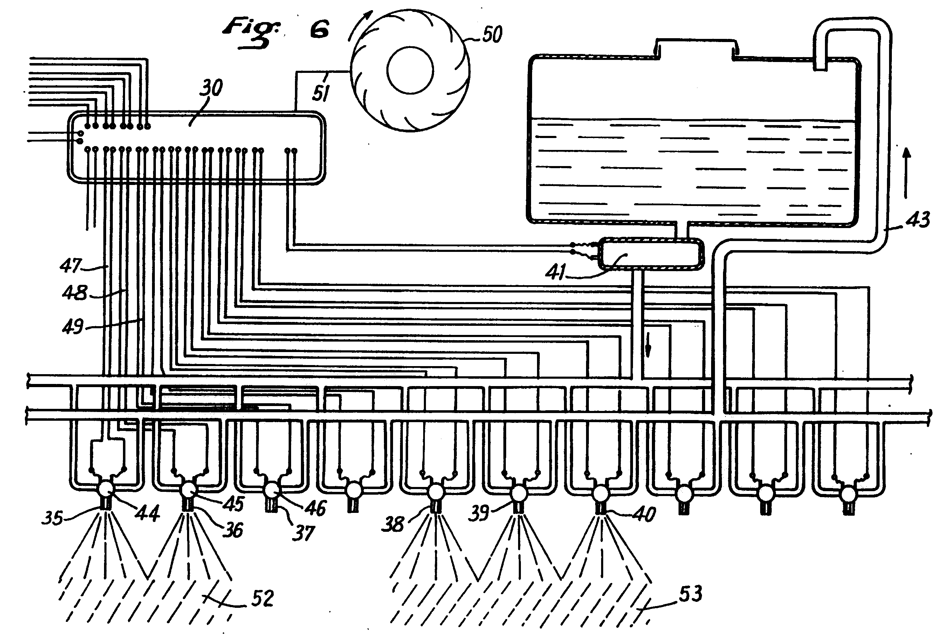

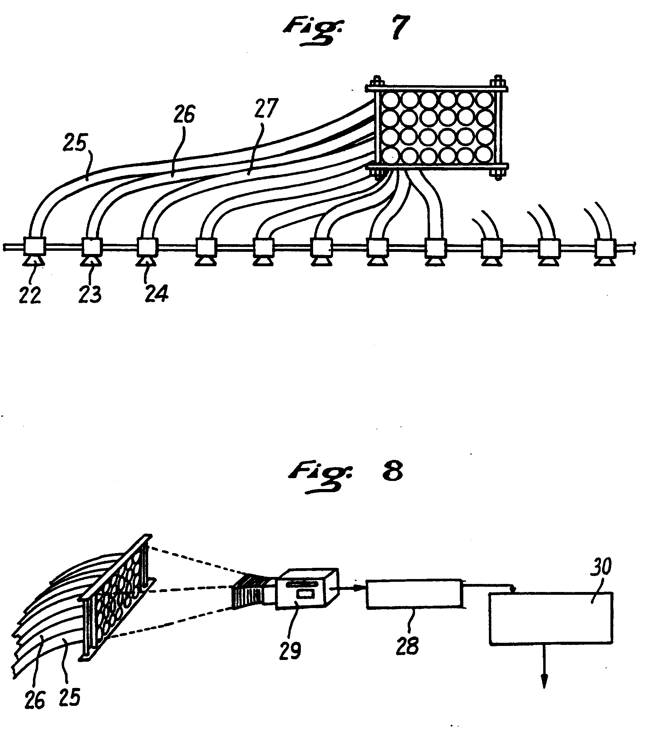

Dans le cadre de cette réalisation qui est illustrée aux figures 7 et 8, on voit que parallèlement aux rampes de pulvérisation (non représentées pour l'intelligence du dessin) sont disposées une ou des rampes de détection optique, comportant une pluralité de détecteurs optiques références 22,23,24 reliés par des guides d'ondes 25,26,27 à un dispositif central d'analyses d'images 28 comportant une caméra 29 et apte à adresser au micro-processeur de programmation 30 des signaux déclenchés par la détection de variations chromatiques et engendrant la mise en action de celle ou celles des buses de pulvérisation correspondant aux détecteurs optiques au niveau desquels les variations ont été descellées.

Un dispositif de correction automatique peut être inséré dans le système pour tenir compte de l'ensoleillement et en conséquence de l'éclairement instantané de la zone ponctuelle soumise à détection.

On comprend que il est ainsi possible de parcourir "à l'aveugle" le champ de culture, la machine opérant d'elle-même le repérage des zones infestées et provoquant automatiquement le déclenchement des opérations ponctuelles de pulvérisation dans chaque zone où le besoin a été détecté.

Une dernière application de l'invention est illustrée aux figures 4 et 5.

La figure 5 représente une vue schématique d'une image dont la réalisation au sol est souhaitée par exemple à des fins publicitaires ; l'image peut représenter un sigle, un symbole, un message à des fins ornementales, décoratives ou publicitaires ; on pourra citer à titre d'exemple la représentation de la marque ou du logo type d'une entreprise sur la pelouse ou le parc attenant à son implantation, ou la représentation des armoiries d'une province ou d'une ville sur une colline à proximité d'une autoroute ou à proximité de la ville elle-même.

La représentation globale de la figure 4 sera décomposée idéalement en bandes longitudinales et parallèles respectivement 31,32, 33 et 34 chaque bande correspondant à un passage de la machine d'épandage.

La machine d'épandage pourra être chargée en produits colorants d'une seule couleur mais il sera également possible d'assurer selon le procédé et la méthode de l'invention des représentations sur place en plusieurs couleurs.

La machine d'épandage pourra aussi être chargée de divers produits phytosanitaires (desherbants notamment) de manière à agir sur la végétation en place et à en modifier ponctuellement l'aspect.

Chaque bande 31,32,33,34 représentant un passage de la machine correspond à un programme.

Et chaque bande 31 sera décomposée elle-même longitudinalement en sous-bandes correspondant au positionnement d'une buse sur la rampe d'épandage.

On voit qu'il est facile soit à partir d'un dispositif de lecture optique, soit éventuellement par une saisie manuelle, de lire successivement chacune des bandes 31,32,33 et 34 de façon à établir, sur un support informatique ou optique un programme tel que sur place le déclenchement de déversement du produit coloré se fera lorsque la buse correspondante se situe au niveau d'une zone discrète au sol sur laquelle le produit doit être appliqué de façon a assurer globalement la représentation souhaitée.

Et selon une forme de réalisation simple le programme pourra être simplement tracé sur des bandes successives 31,32,33 et 34 et alimentant un lecteur optique comportant en lignes autant de têtes de lecture que de buses de déversement.

Le lecteur optique est alimenté à chaque passage par les bandes successivement 31,32, etc... et lorsque le lecteur correspondant à une buse détecte la présence d'une zone discrète colorée sur le support de programme, il déclenche automatiquement la projection d'un produit sur le sol, jusqu'à ce que l'arrivée d'une zone blanche interrompe cette projection.

On voit ainsi sur la figure 5 la projection sur le terrain et en situation réelle du programme tel qu'il est encadré en traits pointillés sur la figure 4 et on comprend qu'il est possible dans cette forme de réalisation de réaliser des compositions polychromiques à partir de plusieurs passages chaque passage correspondant à la projection d'une couleur et étant alimenté à partir d'un programme spécifique à cette couleur.

La figure 6 illustre un mode de réalisation du dispositif selon l'invention représenté partiellement.

On sait que les dispositifs de projection peuvent comporter jusqu'à plus de 60 buses ; dans la figure 6 le nombre a été limité à 10 pour la clarté de l'invention étant entendu que la machine comportera un nombre de buses correspondant aux possibilités techniques.

On voit que chacune des buses de projection 35,36,37,38,39,40, etc... sont alimentées via la pompe 41 depuis le réservoir 42.

Un circuit de retour 43 permet l'acheminement du produit non déversé en fonction du débit des pompes.

Chaque pompe est soumise à l'action d'un organe de commande (ouverture, fermeture) apte à régler son débit soit par tout ou rien, soit éventuellement par dosage calibré.

Cet organe de réglage de 44,45,46 constitué par exemple d'une électrovanne est lui-même commandé par un circuit indépendant 47,48,49 provenant du micro-processeur central de programmation 30.

Ce micro-processeur reçoit par ailleurs les informations sur la vitesse d'avancement du véhicule prélevé sur la roue 50 et acheminé par le circuit 51.

Le micro-processeur contient des mémoires et notamment des mémoires programmables permettant de commander en fonction dudit programme le cycle d'ouverture et/ou de fermeture des buses 35,36, etc...

On voit dans l'exemple de la figure 6 que les buses 35,36 d'une part, 38,39 et 40 d'autre part sont en position d'ouverture de sorte que sont ainsi déversés sur le sol les produits actifs selon les deux bandes respectivement 52,53.

Mais on comprend que la fermeture successive et convenablement régulée des buses depuis l'extrémité correspondant à la buse 35, vers l'extrémité opposée permet de réaliser un déversement sur le sol épousant une forme terminale angulaire (en biseau) par rapport à la direction d'avancement de la machine.

On comprend également que le dispositif de la figure 7 peut être couplé avec le dispositif représenté a la figure 8 de sorte que chaque buse déverse (comme précédemment décrit), un jet de produits actifs en fonction de la détection optique qui a été relevée immédiatement en amont par les détecteurs optiques 22,23 (figure 8). Ceci pourrait être utilisé pour l'entretien de revêtement au sol ; les parties détériorées étant repérées par les détecteurs optiques lesquels déclenchent la projection d'un produit d'entretien.

## Revendications

1. Procédé d'épandage au sol d'un produit actif à l'état liquide ou pulvérulent, en vue du recouvrement d'une surface au sol décomposée en bandes parallèles longitudinales, le procédé étant du type dans lequel le produit est répandu sur le sol par au moins une rampe, chaque bande correspondant à un passage de la rampe qui est déplacée au-dessus du sol et munie d'une pluralité de buses de projection (35,36,37,38) et dans lequel on contrôle par des circuits de commande appropriés (47,48,49) le débit des buses prévues à cet effet avec un organe de réglage approprié (44,45,46), ce contrôle étant effectué depuis un organe central de programmation, la projection au sol étant programmée par sous bandes parallèles, chaque sous bande parallèle correspondant à une surface au sol desservie par une buse, caractérisé en ce que la programmation soit instantanée et en temps réel, soit à l'avance, régule le débit de chaque buse, individuellement et à tout instant du parcours, en fonction de la géométrie du sol programmée par zones discrètes, de manière à commander de façon automatique et sélective le déversement de produit sur le sol, au niveau de chaque buse située à l'aplomb de la zone discrète correspondant de façon précise aux besoins, de sorte que l'epandage epouse au sol des configurations et representations suivant une geometrie programmée

2. Procédé selon la revendication 1, caractérisé en ce que la régulation du débit au niveau de chaque buse s'effectue par ouverture fermeture correspondant à une réponse et à un fonctionnement en tout ou rien.

3. Procédé selon l'une des revendications 1 à 2 caractérisé en e qu'on procède à chaque instant à une analyse par exemple par des moyens optiques, de la nature de la zone discrète soumise à l'action potentielle de chaque buse, par exemple en analysant la coloration de la végétation, et en fonction des résultats de cette analyse, effectuée sur le terrain lui-même, on envoie un signal au micro-processeur de programmation en vue d'une position déterminée (ouverture et fermeture) de chaque buse laquelle est ainsi mise en action en fonction de l'analyse optique effectuée sur le terrain.

4. Procédé selon l'une des revendications 1 à 3, caractérisé en ce qu'on effectue sur la même surface réceptrice une pluralité de passages successifs des rampes de déversement, chaque passage correspondant à l'épandage d'un produit spécifique et étant effectué sur des zones discrètes programmées et spécifiques à chaque produit, de sorte que les produits différents, en fonction des programmes de chaque passage, se recouvrent totalement ou partiellement sur chaque zone ou au contraire soient exclusifs l'un de l'autre.

5. Procédé selon l'une des revendications 1 à 4, caractérisé en ce que le produit actif répandu est prévu avec une action sur l'évolution de la végétation.

6. Procédé selon l'une des revendications 1 à 4, caractérisé en ce que le produit actif répandu a une action de coloration directe sur le sol.

7. Procédé selon l'une des revendications 1 à 6, caractérisé en ce que l'ensemble des programmes d'ouverture ou de fermeture successives des buses est contenu dans un support amovible de nature magnétique ou optique correspondant à la configuration de la surface déterminée à traiter, et le programme est divisé en une pluralité de séquences successives, chaque séquence correspondant à un parcours desservant une partie déterminée de la surface à traiter, et on envoie à l'organe central de commande piloté par microprocesseur un signal de départ pour le déclenchement de la séquence du programme correspondant au début de chaque nouveau parcours.

8. Dispositif en vue de la mise en oeuvre du procédé selon l'une des revendications 1 à 7 d'épandage au sol d'un produit actif en vue du recouvrement d'une surface au sol décomposée en bandes parallèles longitudinales et du type comportant sur un châssis mobile un réservoir (42) de produits à répandre, à l'état liquide ou pulvérulent, le dispositif comportant en outre une pompe (41) en vue d'assurer le déplacement du produit depuis ledit réservoir vers des rampes munies de buses (35,36,37), de projection et d'épandage, chaque bande correspondant à un passage de la rampe, chaque buse étant apte à desservir une sous bande située à l'aplomb du parcours de ladite buse, les bandes étant parallèles entre elles, et dans lequel chaque buse est pourvue d'une vanne de fermeture (44,45,46) soumise à un circuit de commande (47,48,49) indépendant relié à un moyen central de commande et de programmation tel qu'un microprocesseur programmable (30) apte à contrôler à chaque instant le déversement de produits au niveau de chaque buse, et le microprocesseur est associé d'une part à un compteur apte à intégrer les données correspondant à la vitesse d'acheminement du véhicule et d'autre part à une entrée en permettant d'intégrer des données correspondant à la configuration géométrique du terrain, caractérisé en ce que le microprocesseur est agencé de façon à réguler soit instantanément et en temps réel, soit à l'avance, en fonction d'un programme prédéterminé, le débit de chaque buse, individuellement, et desservant une sous bande parallèle à tout instant du parcours, en fonction de la géométrie du sol programmée par zones discrètes, de manière à commander de façon automatique et sélective le déversement de produit sur le sol, au niveau de chaque buse située à l'aplomb de la zone discrète correspondant de façon précise aux besoins. de sorte que l'epandage epouse au sol des configurations & representations suivant une geometrie programmée

9. Dispositif selon la revendication 8, caractérisé en ce que le microprocesseur (30) est lui-même soumis à des moyens de programmation comportant au moins un lecteur optique constitué d'une pluralité de têtes de lecture, à raison d'une tête de lecture pour chaque buse commandée de façon indépendante, et les têtes de lecture sont disposées en lignes et prévues pour assurer la lecture d'une bande support d'image admise en défilement sous l'ensemble des têtes de lecture alignées transversalement par rapport à l'axe de défilement, chaque tête de lecture étant apte à analyser la zone ponctuelle de l'image située à la verticale de ladite tête pour adresser au microprocesseur un signal d'ouverture ou de fermeture à la buse correspondante en permettant ainsi de reproduire sur le terrain l'image contenue en réduction de la bande support d'image

10. Dispositif selon l'une des revendications 8 ou 9, caractérisé en ce que la ou les rampes porteuses de buses comportent des dispositifs d'analyse notamment par des moyens optiques (22,23,24), permettant de déterminer des caractéristiques du sol ou de la végétation située à la verticale desdits moyens d'analyse, et ces moyens d'analyse notamment optiques sont propres à envoyer des signaux au microprocesseur de programmation (30) pour déclencher la commande d'ouverture ou d'arrêt des buses et par conséquent le déversement ou l'absence de déversement de produits sur le sol au niveau de chaque buse située à l'aplomb de la zone discrète instantanément analysée.

## Claims

1. Method for spreading over the ground an active product in the liquid or pulverulent state with a view to covering an area on the ground broken up into longitudinal parallel strips, the method being of the type in which the product is spread over the ground by at least one spray nozzle pipe, each strip corresponding to a passage of the pipe which is displaced above the ground and provided with a plurality of projection nozzles (35, 36, 37, 38) and in which the flowrate of the nozzles is monitored by appropriate control circuits (47, 48, 49), said nozzles being provided to that end with an appropriate adjusting member (44, 45, 46), such monitoring being effected from a central programmation member, the projection on the ground being programmed by parallel sub-strips, each parallel sub-strip corresponding to an area on the ground served by a nozzle, characterized in that the programmation, either instantaneous and in real time, or in advance, regulates the flowrate of each nozzle, individually and at any instant of the path, as a function of the geometry of the ground programmed by discrete zones, so as to control, automatically and selectively, the pouring of product on the ground at the level of each nozzle located plumb with the corresponding discrete zone precisely in accordance with needs, with the result that, on the ground, the spreading takes configurations and representations in accordance with a programmed geometry.

2. Method according to Claim 1, characterized in that regulation of the flowrate at the level of each nozzle is effected by opening/closure corresponding to a response and to an all-or-nothing operation.

3. Method according to one of Claims 1 to 2, characterized in that one proceeds at each instant with an analysis, for example by optical means, of the nature of the discrete zone subjected to the potential action of each nozzle, for example by analyzing the coloration of the vegetation, and as a function of the results of this analysis, effected on the terrain itself, a signal is sent to the programming microprocessor with a view to a determined position (opening and closure) of each nozzle, which is thus activated as a function of the optical analysis made on the terrain.

4. Method according to one of Claims 1 to 3, characterized in that there is effected on the same receiving area a plurality of successive passages of the spray nozzle pipes, each passage corresponding to the spreading of a specific product and being effected on programmed discrete zones specific to each product, with the result that the different products, as a function of the programmes of each passage, totally or partially overlap on each zone or, on the contrary, are exclusive from one another.

5. Method according to one of Claims 1 to 4, characterized in that the active product spread has an action on the development of the vegetation.

6. Method according to one of Claims 1 to 4, characterized in that the active product spread has a direct action of coloration on the ground.

7. Method according to one of Claims 1 to 6, characterized in that all the programmes for successively opening or closing the nozzles are contained in a removable support of magnetic or optical nature corresponding to the configuration of the determined surface to be treated, and the programme is divided into a plurality of successive sequences, each sequence corresponding to a path serving a determined part of the area to be treated, and there is sent to the central control member piloted by microprocessor, a starting signal for triggering off the sequence of the programme corresponding to the beginning of each new path.

8. Device for carrying out the method according to one of Claims 1 to 7 for spreading on the ground an active product with a view to covering an area of the ground broken up into longitudinal parallel strips and of the type comprising on a mobile chassis a reservoir (42) of products to be spread, in the liquid or pulverulent state, the device further comprising a pump (41) for ensuring displacement of the product from said reservoir towards spray pipes provided with nozzles (35, 36, 37) for projecting and spreading, each strip corresponding to a passage of the pipe, each nozzle being adapted to serve a sub-strip located plumb with the path of said nozzle, the strips being parallel to one another, and in which each nozzle is provided with a closure valve (44, 45, 46) subjected to an independent control circuit (47, 48, 49) connected to a central control and programmation means, such as a programmable microprocessor (30) adapted to monitor at each instant the pouring of products at the level of each nozzle, and the microprocessor is associated, on the one hand, with a meter adapted to integrate the data corresponding to the speed of advance of the vehicle and, on the other hand, with an input allowing data corresponding to the geometrical configuration of the terrain to be integrated, characterized in that the microprocessor is arranged so as to regulate either instantaneously and in real time or in advance, as a function of a predetermined programme, the flowrate of each nozzle, individually, and serving a parallel sub-strip at any instant of the path, as a function of the geometry of the ground programmed by discrete zones, so as automatically and selectively to control the pouring of product on the ground, at the level of each nozzle located plumb with the corresponding discrete zone precisely in accordance with needs, with the result that, on the ground, the spreading takes configurations and representations in accordance with a programmed geometry.

9. Device according to Claim 8, characterized in that the microprocessor (30) is itself subjected to programmation means comprising at least one optical reader constituted by a plurality of reading heads, at a rate of one reading head for each nozzle controlled independently, and the reading heads are disposed in lines and provided to ensure reading of an image support band admitted to advance under all the reading heads aligned transversely with respect to the axis of advance, each reading head being adapted to analyze the punctual zone of the image located vertically with respect to said head to address to the microprocessor a signal for the corresponding nozzle to open or close, thus making it possible to reproduce on the terrain the image contained in reduction on the image support band.

10. Device according to one of Claims 8 or 9, characterized in that the nozzle bearing pipe or pipes comprise devices for analysis, particularly by optical means (22, 23, 24), making it possible to determine characteristics of the ground or vegetation located vertically with respect to said analysis means, and these analysis means, particularly optical ones, are adapted to send signals to the programmation microprocessor (30) to trigger off the control of opening or stop of the nozzles and consequently the pouring or absence of pouring of products on the ground at the level of each nozzle located plumb with the instantaneously analyzed discrete zone.

## Patentansprüche

1. Verfahren zum Aufbringen eines Wirkstoffes in flüssigem oder pulverisiertem Zustand auf einen Boden, zum Bedecken einer Bodenoberfläche, welche in parallele Längsstreifen unterteilt ist, wobei der Wirkstoff auf den Boden durch mindestens eine Rampe verteilt wird, welche über dem Boden bewegt wird und mit einer Vielzahl von Projektionsdüsen (35, 36, 37, 38) versehen ist, wobei durch geeignete Befehlsschaltkreise (47, 48, 49) die Durchflußmenge durch die, zu diesem Zweck mit einem geeigneten Regelorgan (44, 45, 46) versehenen Düsen geregelt wird, wobei die Kontrolle von einer zentralen Programmiereinheit gewährleistet ist, und das Sprühen auf den Boden für jeweils parallele Unterstreifen programmiert wird, wobei jeder Unterstreifen einer Bodenfläche entspricht, die von einer Düse versorgt wird,
**dadurch gekennzeichnet, daß**
die Programmierung entweder in Echtzeit und zeitgleich oder in Vorabprogrammierung, die Durchflußmenge einer jeden Düse individuell und zu jedem Zeitpunkt der Strecke in Abhängigkeit der Geometrie des Bodens, welche nach diskreten Zonen programmiert ist, reguliert, um das Ausschütten des Wirkstoffes auf den Boden, für jede Düse oberhalb einer diskreten Zone, genau den Erfordernissen entsprechend automatisch und selektiv zu steuern, so daß das auf den Boden Aufgebrachte Konfigurationen und Repräsentationen gemäß einer programmierten Geometrie annimmt.

2. Verfahren nach Anspruch 1, dadurch gekennzeichnet, dass die Regulierung der Durchflußmenge in Höhe jeder Düse durch Öffnen und Schließen gemäß einer Systemantwort und einem Funktionieren nach dem Prinzip "Alles oder nichts" bewerkstelligt wird.

3. Verfahren nach einem der Anspüche 1 oder 2, dadurch gekennzeichnet, daß zu jedem Zeitpunkt eine Analyse, beispielsweise durch optische Mittel, über die Beschaffenheit der der potentiellen Einwirkung jeder Düse unterliegenden diskreten Zone erfolgt, indem beispielsweise die Färbung der Vegetation analysiert wird, und in Funktion des Ergebnisses dieser auf dem Gelände selbst erfolgten Analyse ein Signal an den Mikroprozessor gesandt wird im Hinblick auf die bestimmte Position (Öffnung und Schließen) jeder Düse, die auf diese Art und Weise in Abhängigkeit der auf dem Gelände erfolgten optischen Analyse aktiviert wird.

4. Verfahren nach einem der Ansprüche 1 bis 3, dadurch gekennzeichnet, daß auf die gleiche aufnehmende Oberfläche eine Vielzahl von aufeinanderfolgenden Durchgängen der Aufbringrampen einwirkt, wobei jeder Durchgang dem Aufbringen eines spezifischen Produkts entspricht und wobei jeder Durchgang auf diskreten, programmierten und für jedes Produkt spezifischen Zonen derart durchgeführt wird, dass sich die verschiedenen Produkte in Abhängigkeit des Programms eines jeden Durchgangs vollkommen oder teilweise auf jeder Zone überdecken oder im Gegenteil einander nicht überdecken.

5. Verfahren nach einem der Ansprüche 1 bis 4, dadurch gekennzeichnet, daß der verteilte Wirkstoff auf die Entwicklung der Vegetation einwirkt.

6. Verfahren nach einem der Ansprüche 1 bis 4, dadurch gekennzeichnet, daß der verteilte Wirkstoff eine direkte Farbwirkung auf dem Boden hinterläßt.

7. Verfahren nach einem der Ansprüche 1 bis 6, dadurch gekennzeichnet, daß die der Konfiguration der zu behandelnden Oberfläche entsprechende Gesamtheit der aufeinander abfolgenden Programme zum Öffnen oder Schließen der Düsen auf einem beweglichen Datenträger, magnetischer oder optischer Natur, enthalten ist, und das Programm in eine Vielzahl von aufeinanderfolgenden Sequenzen geteilt ist, wobei jede Sequenz einer einen bestimmten Teil der zu behandelnden Oberfläche abzufahrenden Strecke entspricht, und dem Mikroprozessor ein Startsignal zum Auslösen der dem Beginn eines jeden neuen Durchlaufs entsprechenden Programmsequenz gesandt wird.

8. Vorrichtung zur Anwendung des Verfahrens zum Aufbringen eines Wirkstoffes auf einen Boden, zum Bedecken einer Bodenfläche, welche in parallele Längsstreifen unterteilt ist, nach einem der Ansprüche 1 bis 7, die auf einem beweglichen Rahmen einen Behälter (42) für die zu verteilenden Produkte in flüssigem oder pulverisiertem Zustand und außerdem eine Pumpe (41) aufweist, um die Abgabe des Produkts von dem Behälter zu den mit Projektions- und Verteilerdüsen (35, 36, 37) versehenen Rampen zu bewerkstelligen, wobei jeder Streifen einem Durchgang der Rampe entspricht, wobei jede Düse einen senkrecht zur Strecke der Düse gelegenen Unterstreifen versorgt, wobei die Streifen parallel zueinander liegen, wobei jede Düse mit einem Schieber zum Schließen (44, 45, 46) versehen ist, der von einem unabhängigen Befehlsschaltkreis (47, 48, 49) geregelt wird, der mit einer zentalen Steuer- und Programmiereinrichtung wie beispielsweise einem programmierbaren Mikroprozessor (30) verbunden ist, der zu jedem Zeitpunkt die Abgabe des Produkts in Höhe einer jeden Düse kontrolliert, und der Mikroprozessor einerseits mit einem Zähler verbunden ist, der die Daten entsprechend der Geschwindigkeit des Heranführens des Fahrzeuges integriert und andererseits mit einem Eingang verbunden ist, der die Daten entsprechend der geometrischen Konfiguration des Bodens zu integrieren gestattet, dadurch gekennzeichnet, daß der Mikroprozessor derart eingerichtet ist, daß er die Abgabe aus jeder Düse, individuell und für einen Unterstreifen sorgend, entweder in Echtzeit und zeitgleich oder in Abhängigkeit eines vorbestimmten Programms, zu jedem Zeitpunk der Strecke reguliert, in Abhängigkeit der Geometrie des Bodens, welche nach diskreten Zonen programmiert ist, um das Ausschütten des Wirkstoffes auf den Boden, für jede Düse oberhalb einer diskreten Zone, genau den Erfordernissen entsprechend automatisch und selektiv zu steuern, so dass das auf den Boden Aufgebrachte Konfigurationen und Repräsentationen gemäß einer programmierten Geometrie annimmt.

9. Vorrichtung nach Anspruch 8, dadurch gekennzeichnet, daß der Mikroprozessor (30) selbst von Programmiereinheiten gesteuert wird, die mindestens einen optischen, aus einer Vielzahl von Leserköpfen zusammengesetzten Leser aufweisen, wobei jeder unabhängig gesteuerten Düse ein Leserkopf zugeteilt ist, und die Leserköpfe in Linien angeordnet und zum Lesen eines Bildträger-Streifens vorgesehen sind, der unter der Gesamtheit der senkrecht zu der Vorbeiziehrichtung liegenden Leserköpfe vorbeigezogen wird, wobei jeder Lesekopf die punktuelle Zone des vertikal zu dem Kopf gelegenen Bildes analysiert, um an den Mikroprozessor ein Signal zum Öffnen oder Schließen der entsprechenden Düse zu senden, wodurch auf der Stelle das Bild reproduziert wird, das verkleinert in dem Bildträger enthalten ist.

10. Vorrichtung nach einem der Ansprüche 8 oder 9, dadurch gekennzeichnet, daß die die Düsen tragenden Rampen Einrichtungen zum Analysieren enthalten, insbesondere optische Mittel (22, 23, 24), die die Eigenschaften des Bodens oder der vertikal zu den optischen Mitteln gelegenen Vegetation bestimmen, und daß diese insbesondere optischen Analysiermittel Signale an den Mikroprozessor zum Programmieren (30) entsenden, um den Befehl zum Öffnen oder Schließen der Düsen, und folglich die Abgabe oder Nicht-Abgabe des Produkts auf den Boden in Höhe einer jeden Düse, die senkrecht zu der augenblicklich analysierten diskreten Zone liegt, auszulösen.
